# EUROPÄISCHE PATENTANMELDUNG

(11) **EP 1 933 116 A2**
(43) Veröffentlichungstag der Anmeldung: **18.06.2008**
(21) Anmeldenummer: 07121175.9
(22) Anmeldetag: 21.11.2007
(51) Int. Cl.: G01F 1/60

(54) **Batteriebetreibbares Feldgerät zur Prozessinstrumentierung**

(30) Priorität: 22.11.2006 DE 102006055125
(71) Anmelder: SIEMENS AKTIENGESELLSCHAFT, 80333 München (DE)
(72) Erfinder: Jørgensen, Michael Erik, 6430, Nordborg (DK)

(57) **Zusammenfassung**

Die Erfindung betrifft ein batteriebetreibbares Feldgerät zur Prozessinstrumentierung, insbesondere einen Messumformer (1) zur magnetisch-induktiven Durchflussmessung. Zur Versorgung des Feldgeräts (1) mit der erforderlichen Betriebsenergie sind eine Batterie (2) und ein Schaltnetzteil (3) vorgesehen, das derart ausgebildet ist, dass jedem Schaltzyklus eine im Wesentlichen vorbekannte Menge von aus der Batterie (2) entnommener elektrischer Ladung zuordbar ist. In einer Auswerteeinrichtung (4, 5) wird mit einem Zähler (4) und mit einem Mikroprozessor (5) die Anzahl der Schaltzyklen ermittelt und anhand dieser werden die bereits mit der Batterieladung durchgeführten Schaltzyklen und somit die aus der Batterie entnommene Ladungsmenge berechnet, mit einem Schwellwert verglichen und ein Meldesignal bei Überschreiten des Schwellwerts, das heißt bei einem bestimmten Ladezustand der Batterie, ausgegeben. Somit werden mit besonders einfachen Mitteln eine zuverlässige Überwachung des Ladezustands der Batterie des Feldgeräts erreicht und ein unerwarteter Ausfall aufgrund entleerter Batterie vermieden.

## Beschreibung

Die Erfindung betrifft ein batteriebetreibbares Feldgerät zur Prozessinstrumentierung, insbesondere einen Messumformer zur magnetisch-induktiven Durchflussmessung, nach dem Oberbegriff des Anspruchs 1.

Ein Messumformer zur magnetisch-induktiven Durchflussmessung, der mit einer Batterie betrieben werden kann, ist bereits aus der WO 2004/092685 A2 bekannt. Bei magnetisch-induktiven Durchflussmessern erzeugt man senkrecht zu einer Durchflussrichtung ein Magnetfeld und nimmt senkrecht zum Magnetfeld und senkrecht zur Durchflussrichtung ein Messsignal zwischen zwei Elektroden ab. Soll der Durchflussmesser von einer Batterie mit der zu seinem Betrieb erforderlichen Energie versorgt werden, kann Energie eingespart und damit die Batterielebensdauer erhöht werden, indem eine Auswerteeinrichtung, durch welche Spulen zur Erzeugung des Magnetfelds angesteuert werden und das Messsignal zwischen den zwei Elektroden zur Bestimmung eines Messwerts der Durchflussgeschwindigkeit ausgewertet wird, wiederholt an- und abgeschaltet wird. Weiterhin kann der Strom, mit dem die Magnetfeldspulen gespeist werden, sehr niedrig gehalten werden.

Feldgeräte zur Prozessinstrumentierung werden häufig in automatisierungstechnischen Anlagen größeren Umfangs eingesetzt, in denen eine Wartung nach einem vorbestimmten Konzept erfolgt. Beispielsweise bei einer zyklischen Wartung ist ein Batterietausch lediglich während festgelegter Wartungszeiträume möglich. Ein unerwarteter Ausfall eines Feldgeräts aufgrund einer erschöpften Batterie könnte zu einem unerwünschten Anlagenstillstand führen, der mit einem hohen Kostenaufwand verbunden wäre. Es ist daher wünschenswert, den Ladezustand der Batterie bei Feldgeräten zur Prozessinstrumentierung zu überwachen, um einen rechtzeitigen Wechsel zu ermöglichen und unvorhergesehene Ausfälle zu vermeiden.

Eine Möglichkeit zur Überwachung des Batteriezustands kann darin gesehen werden, verschiedenen Vorgängen, die in einem Feldgerät durchgeführt werden, beispielsweise einem Messvorgang zur Ermittlung eines neuen Messwerts oder einem Kalibriervorgang zur Überprüfung der Messgenauigkeit, die jeweils dafür erforderliche Energiemenge zuzuordnen und die Anzahl der bereits mit der Batterieladung durchgeführten Vorgänge zu zählen, die ermittelte Anzahl mit der zugeordneten Energiemenge zu multiplizieren und so die dafür bereits aus der Batterie verbrauchte Energiemenge zu ermitteln. Eine derartige Einrichtung zur Überwachung des Ladezustands der Batterie kann jedoch mit Fehlern behaftet sein, beispielsweise da die Messung der jeweils für einen Vorgang erforderlichen Energiemenge unter Referenzbedingungen erfolgt, die den tatsächlichen Bedingungen nur ungenügend entsprechen, oder da ein modular aufgebautes Feldgerät um Module ergänzt ist, beispielsweise Kommunikationsmodule oder Module zur Messwertanzeige, die den Energieverbrauch erhöhen und bei der Berechnung der bereits entnommenen Energie nicht berücksichtigt werden.

Aus der US 6,903,659 B2 ist ein Stellungsregler für ein Ventil bekannt, der durch eine Batterie versorgt wird. Zur Überwachung des Ladezustands dient ein Batteriemanagement, durch welches die Restbetriebszeit, für welche noch ausreichend Kapazität der Batterie zur Verfügung steht, ermittelt wird. Das Feldgerät kann über eine drahtlose oder über eine drahtgebundene Schnittstelle, zum Bespiel nach dem HART-Standard, in ein Automatisierungsnetzwerk eingebunden werden. Zur frühzeitigen Einleitung geeigneter Maßnahmen wird ein kritischer Batteriezustand durch eine Alarmmeldung angezeigt.

Ein weiteres Verfahren zur Überwachung des Ladezustands einer Batterie ist aus der DE 38 23 038 C2 bekannt.

Aus der DE 103 37 679 A1 ist ein Verfahren zur Anzeige einer verbleibenden Restnutzungsdauer eines batteriebetriebenen Analysegeräts bekannt. Die Restnutzungsdauer wird anhand der bisherigen Batterienutzungsdauer und der Anzahl der bereits vorgenommenen Analysemessungen berechnet.

Aus der US-PS 5,065,084 ist ein elektronisches Gerät bekannt, bei welchem zur Abschätzung der Restlebensdauer einer Batterie die bisherige Betriebsdauer des elektronischen Geräts durch Zählen der Takte eines Taktgenerators bestimmt wird.

In der US 6,449,726 B1 ist beschrieben, die Restlebensdauer einer Batterie eines mit Funkschnittstelle ausgerüsteten Geräts aus der Anzahl und der Dauer der bereits durchgeführten Funkübertragungen abzuschätzen.

Aus der US 6,903,659 B2 ist ein batteriebetriebener Druckregler bekannt, in welchem zur Abschätzung der verbleibenden Batteriekapazität Betriebsparameter der Batterie erfasst und ausgewertet werden.

Der Erfindung liegt die Aufgabe zugrunde, ein batteriebetreibbares Feldgerät zur Prozessinstrumentierung, insbesondere einen Messumformer zur magnetisch-induktiven Durchflussmessung, zu schaffen, das sich durch eine genauere Überwachung des Ladezustands einer Batterie mit relativ geringem Aufwand auszeichnet.

Zur Lösung dieser Aufgabe weist das batteriebetreibbare Feldgerät der eingangs genannten Art die im kennzeichnenden Teil des Anspruchs 1 angegebenen Merkmale auf. In Anspruch 2 ist eine vorteilhafte Weiterbildung der Erfindung beschrieben.

Durch die Erfindung wird in vorteilhafter Weise die Eigenschaft genutzt, dass Schaltnetzteile in jedem Schaltzyklus eine etwa konstante Menge elektrischer Ladung an ihrer Eingangsseite aufnehmen. Die dieser Ladungsmenge entsprechende Energie wird von der Eingangsseite zur Ausgangsseite übertragen und mit eventuell geänderter Spannung an angeschlossene Verbraucher ausgegeben. Bei Schaltnetzteilen dieses Typs passt sich die Häufigkeit der Schaltzyklen an die jeweils an der Ausgangsseite entnommene Energiemenge an. Die aus der Batterie entnommene Ladungsmenge entspricht daher im Wesentlichen dem Produkt der Anzahl der Schaltzyklen und der jeweils bei einem Schaltzyklus an der Eingangsseite des Schaltnetzteils aufgenommenen Menge elektrischer Ladung. Letztere ist vom jeweiligen Typ des verwendeten Schaltnetzteils abhängig und kann, sofern sie nicht von vorn herein bekannt ist, in einfacher Weise berechnet oder messtechnisch ermittelt werden. Die Dauer eines Schaltzyklus setzt sich üblicherweise aus einer Einschaltphase und einer Ausschaltphase eines elektronischen Schalters, beispielsweise eines Transistors, zusammen. Es liegt somit bereits im Schaltnetzteil ein digitales Signal vor, das zur Anzeige von Schaltzyklen verwendet werden kann. Zur Bestimmung der Anzahl mit einer Batterieladung bereits durchgeführter Schaltzyklen können daher in einfacher Weise die Impulse dieses Signals gezählt werden, die seit Beginn des Betriebs des Feldgeräts mit einer neu aufgeladenen Batterie aufgetreten sind. Das bereits erwähnte Produkt von Anzahl der Schaltzyklen und aus der Batterie entnommener Ladungsmenge je Schaltzyklus entspricht daher sehr genau der im Betrieb des Feldgeräts bereits aus der Batterie entnommenen Ladungsmenge. Überschreitet diese Ladungsmenge einen vorgegebenen Anteil der Gesamtkapazität der Batterie, beispielsweise 80% der Gesamtkapazität, so wird ein Meldesignal zur Anzeige eines beim nächsten Wartungszyklus erforderlichen Batteriewechsels ausgegeben. Damit können in zuverlässiger Weise unerwartete Ausfälle des Feldgeräts zwischen Wartungszyklen und somit unerwünschte Anlagenstillstände während des Betriebs einer automatisierungstechnischen Anlage, in welcher das Feldgerät eingesetzt ist, vermieden werden.

Die Erfindung hat weiterhin den Vorteil, dass die bereits aus der Batterie entnommene Ladungsmenge unabhängig vom jeweiligen Ausbau des Feldgeräts stets korrekt bestimmt wird. Häufig sind Feldgeräte nämlich modular aufgebaut und können mit verschiedenen Modulen, beispielsweise zur drahtlosen oder drahtgebundenen Kommunikation innerhalb eines Automatisierungsnetzwerks, ausgerüstet werden. Dabei können zur drahtlosen Kommunikation Funk- oder Infrarot-Module, zur drahtgebundenen Kommunikation PROFIBUS-, PROFINET- oder HART-Module im Bereich der industriellen Kommunikation Verwendung finden. Der Energiebedarf derartiger Module kann sich wesentlich unterscheiden und es ist daher von Vorteil, dass die jeweilige Konfiguration des Feldgeräts nicht bei der Berechnung der aus der Batterie entnommenen Ladungsmenge berücksichtigt werden muss, da diese automatisch in Abhängigkeit des Gesamtverbrauchs des Feldgeräts erfolgt.

Dabei ist zudem von Vorteil, dass auch Software- oder Hardware-Fehler des Feldgeräts, welche den Energieverbrauch des Feldgeräts verändern, nicht zu einem Fehler bei der Berechnung führen, sofern sie sich nicht auf das Zählen der Schaltzyklen oder die je Schaltzyklus entnommene Menge elektrischer Ladung oder die Auswertung dieser Größen in der Auswerteeinrichtung auswirken.

Zudem wirkt sich die Erfindung in vorteilhafter Weise vermindernd auf den Entwicklungsaufwand aus, da eine Bestimmung des Energieverbrauchs bei verschiedenen Vorgängen, beispielsweise des Energieverbrauchs bei einer Messwertermittlung oder des Energieverbrauchs bei einem Kalibriervorgang, entfällt.

Die mit der Überwachung des Batteriezustands verbundene zusätzliche Belastung eines Mikroprozessors, der üblicherweise zur Realisierung einer Auswerteeinrichtung in Feldgeräten Verwendung findet, kann in vorteilhafter Weise besonders gering gehalten werden, wenn zur Realisierung der Auswerteeinrichtung ein Zähler vorgesehen ist, auf den das Anzeigesignal zur Bestimmung der Anzahl der Schaltzyklen geführt ist. Ein Ausgangssignal des Zählers, das einem höherwertigen Bit des Zählerstands entspricht, wird vorteilhaft auf einen Interrupt-Eingang des Mikroprozessors geführt und löst somit immer dann eine Neuberechnung der bereits aus der Batterie entnommenen Ladungsmenge aus, wenn eine weitere Zahl von Schaltzyklen gezählt wurde, wobei die weitere Zahl der jeweiligen Wertigkeit des Zählerausgangssignals entspricht. Die Häufigkeit der Abarbeitung der dazu erforderlichen Interrupt-Routinen und somit die Prozessorlast wird damit durch Verwendung eines einfachen Zählers reduziert.

Alternativ dazu ist es selbstverständlich auch möglich, das Anzeigesignal der Schaltzyklen des Schaltnetzteils auf einen freien Digitaleingang des Mikroprozessors zu führen, der mit einer festen Abtastrate abgefragt wird. Diese sollte dann höher als das Zweifache der Frequenz der Schaltzyklen bei maximalem Energieverbrauch des Feldgeräts gewählt werden.

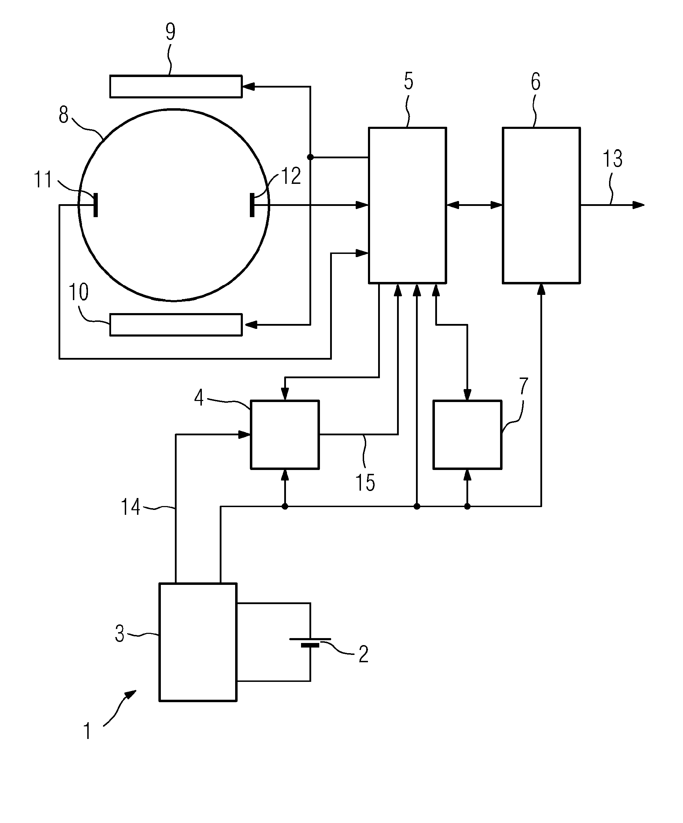

Anhand der Zeichnung, in der ein Ausführungsbeispiel der Erfindung dargestellt ist, werden im Folgenden die Erfindung sowie Ausgestaltungen und Vorteile näher erläutert.

Gemäß der Figur wird ein magnetisch-induktiver Durchflussmesser 1 von einer Batterie 2 mit elektrischer Energie versorgt. Dabei kann es sich beispielsweise um eine Silizium-Batterie mit 3,3 V oder um zwei Alkaline-Batterien mit jeweils 1,5 V, die in Reihe geschaltet sind, handeln. Die Batteriespannung ist auf ein Schaltnetzteil 3 geführt, das diese in eine zum Betrieb der elektronischen Komponenten des Feldgeräts 1 geeignete Spannung, beispielsweise 3,3 V, wandelt. Das Schaltnetzteil 3 arbeitet in Schaltzyklen und entnimmt der Batterie 3 an seiner Eingangsseite in jedem Schaltzyklus eine bestimmte Menge elektrischer Ladung. Als elektronische Komponenten des Feldgeräts 1, die durch das Schaltnetzteil 3 mit Betriebsenergie versorgt werden, sind in dem gezeigten Blockschaltbild ein Zähler 4, ein Mikroprozessor 5, ein Kommunikationsmodul 6 und eine Bedieneinheit 7 dargestellt, die eine Tastatur mit einer Anzeige umfasst. Selbstverständlich können noch weitere oder andere elektronische Komponenten vorhanden sein. Ein Messaufnehmer des Messumformers zur magnetisch-induktiven Durchflussmessung weist ein Messrohr 8 auf, durch welches ein Fluid senkrecht zur Zeichnungsebene strömen kann. Eine Spulenanordnung mit zwei Magnetspulen 9 und 10 erzeugt ein Magnetfeld senkrecht zur Strömungsrichtung. Die Magnetspulen 9 und 10 werden durch den Mikroprozessor 5, der die Funktion einer Ansteuer- und Auswerteeinrichtung übernimmt, angesteuert. Eventuell zwischengeschaltete Leistungsverstärker sind der Übersichtlichkeit wegen in der Figur nicht dargestellt. Senkrecht zum Magnetfeld und senkrecht zur Durchflussrichtung sind zwei Elektroden 11 und 12 am Messrohr 8 angeordnet. Zwischen den Elektroden 11 und 12 ist eine Spannung messbar, wenn ein Fluid durch das Messrohr 8 strömt und gleichzeitig durch die Magnetspulen 9 und 10 ein Magnetfeld erzeugt wird. Diese Spannung wird durch den Mikroprozessor 5, der in geeigneter Weise programmiert ist, ausgewertet und es wird ein Messwert ermittelt, der sowohl auf einer Anzeige der Bedieneinheit 7 als auch über das Kommunikationsmodul 6 auf ein Automatisierungsnetzwerk 13 ausgegeben wird, das den Messumformer 1 mit weiteren Automatisierungskomponenten in einer automatisierungstechnischen Anlage verbindet. Zur Energieeinsparung werden Messvorgänge nicht kontinuierlich sondern zu vorgegebenen Zeitpunkten durchgeführt. Ebenso finden Kalibriervorgänge zur Sicherstellung der erforderlichen Messgenauigkeit nur in größeren Zeitabständen statt. Um unvorhergesehene Ausfälle des Messumformers 1 aufgrund einer entleerten Batterie 2 zu vermeiden, wird diese auf ihren Ladezustand überwacht. Dazu wird ein Anzeigesignal 14 genutzt, das von dem Schaltnetzteil 3 ausgegeben wird und jeweils mit einem Impuls einen Schaltzyklus des Schaltnetzteils 3 anzeigt, in welchem eine vorbestimmte Menge elektrischer Ladung aus der Batterie 2 entnommen wird. Diese Impulse werden in dem Zähler 4 um einen festen Faktor, der durch die Wertigkeit des auf den Interrupt-Eingang des Mikroprozessors 5 geführten Bits festgelegt ist, heruntergeteilt. Ein Puls auf der Ausgabeleitung 15 des Zählers 4 entspricht somit einer entsprechend größeren, aus der Batterie 2 entnommenen Ladungsmenge. Die Impulse auf der Ausgabeleitung 15 werden in dem Mikroprozessor 5 zunächst durch Zählen zur Bestimmung der Anzahl von Schaltzyklen ausgewertet, anschließend wird diese mit der Ladungsmenge je Schaltzyklus multipliziert und somit die Menge der bereits aus der Batterie entnommenen elektrischen Ladung berechnet. Unter Berücksichtigung der Kapazität einer vollständig geladenen Batterie und der bisherigen Betriebszeit mit der bereits entnommenen Ladungsmenge kann zusätzlich in einfacher Weise eine Ermittlung der Restbetriebszeit des Messumformers 1 durchgeführt werden. Überschreitet die Menge der bereits aus der Batterie entnommenen Ladung einen vorgegebenen Schwellwert, beispielsweise 80% der anfangs zur Verfügung stehenden Kapazität, so wird ein Meldesignal erzeugt und sowohl auf die Bedieneinheit 7 als auch über das Automatisierungsnetzwerk 13 ausgegeben, damit ein Austausch der Batterie 2 rechtzeitig vor einem Ausfall des Messumformers 1 vorgenommen werden kann. Bei einem Austausch der Batterie 2 wird der Zähler 4 ebenso wie der Zählerstand des Mikroprozessors 5 für die Anzahl der von der Ausgabeleitung 15 angezeigten Impulse zurückgesetzt, damit der Zählvorgang der mit der neuen Batterie durchgeführten Schaltzyklen erneut bei Null beginnt.

An dem gezeigten Ausführungsbeispiel wird deutlich, dass Zähler 4 und Mikroprozessor 5 eine Auswerteeinrichtung bilden, die es mit besonders einfachen Mitteln ermöglicht, eine zuverlässige Aussage über den Ladezustand der Batterie 2 zu gewinnen und somit unvorhergesehene Ausfälle bei batteriebetreibbaren Feldgeräten zur Prozessinstrumentierung zu vermeiden.

## Patentansprüche

1. Batteriebetreibbares Feldgerät zur Prozessinstrumentierung, insbesondere Messumformer (1) zur magnetisch-induktiven Durchflussmessung, mit einer Batterie (2) zur Versorgung des Feldgeräts (1) mit der zu seinem Betrieb erforderlichen Energie, **dadurch gekennzeichnet,**
**dass** ein Schaltnetzteil (3) zur Wandlung der Batteriespannung in eine zum Betrieb der elektronischen Komponenten (4...7) des Feldgeräts (1) geeignete Spannung vorhanden ist, wobei das Schaltnetzteil (3) derart ausgebildet ist, dass jedem Schaltzyklus des Schaltnetzteils (3) eine im Wesentlichen vorbekannte Menge von aus der Batterie (2) entnommener elektrischer Ladung zuordbar ist und dass durch das Schaltnetzteil (3) ein Anzeigesignal (14) zur Anzeige von Schaltzyklen ausgebbar ist,
**dass** das Anzeigesignal (14) auf eine Auswerteeinrichtung (4, 5) geführt ist zur Ermittelung der Anzahl der bereits mit der Batterieladung durchgeführten Schaltzyklen, zur Berechnung der dabei aus der Batterie (2) entnommenen Ladungsmenge anhand der ermittelten Anzahl der Schaltzyklen, zum Vergleich der Ladungsmenge mit einem vorgegebenen Schwellwert und zur Ausgabe eines Meldesignals bei Überschreiten des Schwellwerts.

2. Batteriebetreibbares Feldgerät nach Anspruch 1, **dadurch gekennzeichnet, dass** zur Realisierung der Auswerteeinrichtung (4, 5) ein Mikroprozessor (5) und ein Zähler (4) vorgesehen sind, wobei das Anzeigesignal (14) auf den Zähler (4) und ein Zählerausgangssignal (15) auf einen Interrupt-Eingang des Mikroprozessors (5) geführt sind.
